# EUROPÄISCHE PATENTSCHRIFT

(11) **EP 0 925 391 B1**
(45) Veröffentlichungstag und Bekanntmachung des Hinweises auf die Patenterteilung: **28.02.2001**
(21) Anmeldenummer: 97940131.2
(22) Anmeldetag: 26.08.1997
(51) Int. Cl.: D01H 1/08

(54) **TOPFSPINNVORRICHTUNG**
POT SPINNING DEVICE
CONTINU A FILER A POTS TOURNANTS

(30) Priorität: 13.09.1996 DE 19637270
(43) Veröffentlichungstag der Anmeldung: 30.06.1999
(73) Patentinhaber: W. Schlafhorst & Co., D-41061 Mönchengladbach (DE); FORSCHUNGSZENTRUM JÜLICH GMBH, 52428 Jülich (DE)
(72) Erfinder: KOLTZE, Karl, D-41189 Mönchengladbach (DE); FREMEREY, Johan, K., D-53129 Bonn (DE)
(86) Internationale Anmeldenummer: EP9704655
(87) Internationale Veröffentlichungsnummer: WO9811284

(56) Entgegenhaltungen:
- WO-A-94/25650
- DE-A- 4 208 039
- DE-A- 4 422 420
- DE-A- 19 526 291
- DE-B- 1 104 653

## Beschreibung

Die Erfindung betrifft eine Topfspinnvorrichtung gemäß dem Oberbegriff des Anspruches 1.

Wie bei anderen Spinnverfahren hängt auch beim Zentrifugen- oder Topfspinnen die Wirtschaftlichkeit des Verfahrens nicht zuletzt von der benötigten Antriebsenergie ab. Es ist in diesem Zusammenhang bekannt, daß insbesondere zur Überwindung der am Außenumfang der Spinnzentrifuge auftretenden Luftreibung ein erheblicher Teil der aufgewendeten Antriebsleistung erforderlich ist. Das heißt, ein großer Teil der Antriebsleistung wird in Bewegungsenergie der den Topf umgebenden Luft umgesetzt, die bei Drehzahlen der Spinnzentrifuge von ca. 60.000 U/min turbulente Strömungsverhältnisse aufweist.

Entsprechende Versuche haben gezeigt, daß die erforderliche Antriebsleistung beispielsweise mit der dritten Potenz der Drehzahl sowie mit der vierten Potenz des Zentrifugendurchmessers wächst.

Man hat deshalb in der Vergangenheit bereits vorgeschlagen, den Spinntopf, wie die Spinnzentrifuge auch genannt wird, in einer möglichst engen Spinnkammer laufen zu lassen, um hierdurch die turbulenzbedingte Luftreibung zu verringern.

Durch die DE-AS 1 104 653 ist eine gattungsgemäße Topfspinnvorrichtung mit einem in einer Spinnkammer rotierenden Spinntopf bekannt, bei der in geringem Abstand zwischen dem Spinntopf und der Spinnkammer ein drehbares Zwischengehäuse vorgesehen ist, das den Spinntopf zum größten Teil umgibt. Das Zwischengehäuse ist mittels zweier Wälzlager rotierbar gelagert und wird während des Betriebes von dem mit relativ hoher Drehzahl umlaufenden Spinntopf über Luftreibung mitgenommen, so daß das Zwischengehäuse mit einer geringeren Drehzahl als der Spinntopf umläuft. Das heißt, zwischen dem Zwischengehäuse und der stillstehenden Spinnkammer entsteht ein Drehzahlunterschied, der deutlich kleiner ist, als die Drehzahl des angetriebenen Spinntopfes.

Da der zwischen dem Spinntopf und dem Zwischengehäuse bzw. zwischen diesem und der Spinnkammer auftretende Luftreibungswiderstand infolge der deutlich verringerten Drehzahlunterschiede verhältnismäßig klein bleibt, vermindert sich die zum Antrieb des Spinntopfes erforderliche Antriebsleistung des Motors.

Nachteilig bei dieser bekannten Vorrichtung ist allerdings, daß sowohl der Spinntopf als auch das Zwischengehäuse in Wälzlagern umlaufen.

Die bei Wälzlagern unvermeidlichen Reibungsverluste verhindern beispielsweise, daß die im Bereich des umlaufenden Spinntopfes auftretende Luftreibung das Zwischengehäuse auf die im Sinne Energieeinsparung optimale Drehzahl beschleunigen kann.

Der Wälzlagertechnik sind im Zusammenhang mit dem Topfspinnen, nicht zuletzt durch die Größe der benötigten Lager, außerdem Grenzen gesetzt, die durch den sogenannten Drehzahlkennwert dieser Lager vorgegeben sind. Der Drehzahlkennwert ist dabei definiert als das Produkt aus Drehzahl in U/min und Durchmesser der Lagerung in mm. Die Grenzen derartiger Lager ergeben sich vorwiegend durch die hohe Fliehkraft der Wälzlager am Lageraußenring sowie die problematische Schmierung dieser Lager bei hohen Drehzahlen.

In Verbindung mit dem Topfspinnen ist des weiteren bereits vorgeschlagen worden, die Spinnzentrifuge in Magnetlagern zu lagern.

Die DE 42 08 039 A1 beschreibt eine Topfspinnmaschine mit magnetgelagerten Spinnzentrifugen.
Bei dieser bekannten Einrichtung sind die hohlzylindrischen Spinntöpfe durch magnetische Kräfte in der Schwebe gehalten. D.h., an den Enden der Spinntöpfe sind jeweils Magnetlager vorgesehen. Die Magnetlager nehmen dabei sowohl die radialen als auch die axialen Lagerkräfte auf. Ferner sind im Bereich der Magnetlager Sensoren zum Feststellen von radialen Auslenkungen des Spinntopfes vorgesehen. Die Meßergebnisse dieser Sensoren werden auf eine den Magnetlagern zugeordnete Lageregelung geschaltet, mit deren Hilfe die Lage des Spinntopfes stabilisiert werden kann.

Eine Magnetlagerung für Spinnzentrifugen ist auch in der DE 38 44 563 C beschrieben.
Bei dieser bekannten Lagerung werden für das mit hoher Geschwindigkeit rotierende Maschinenelement ein permanentmagnetisches Schwerpunktlager und zur Lageregelung ein Stabilisierungslager eingesetzt.

Ausgehend von Topfspinnvorrichtungen der vorstehend beschriebenen Gattung liegt der Erfindung die Aufgabe zugrunde, derartige Topfspinnvorrichtungen weiter zu verbessern.

Diese Aufgabe wird erfindungsgemäß durch eine Vorrichtung gelöst, wie sie im Anspruch 1 beschrieben ist.

Vorteilhafte Ausgestaltungen der Erfindung sind Gegenstand der Unteransprüche.

Die erfindungsgemäße Ausbildung einer Topf spinnvorrichtung ermöglicht eine Reduzierung der Drehzahldifferenz zwischen einer Spinnzentrifuge und einer Zentrifugenummantelung auch bei hohen Drehzahlen, das heißt, bei Zentrifugendrehzahlen > 50.000 U/min. Die über Luftreibung von der Spinnzentrifuge mit verminderter Drehzahl mitgeschleppte, wie die Spinnzentrifuge magnetisch gelagerte Zentrifugenummantelung sorgt dabei für eine deutliche Entschärfung der Luftreibungsverhältnisse, was sich beim Betrieb der erfindungsgemäßen Topfspinnvorrichtung durch eine erhebliche Verminderung der benötigten Antriebsleistung positiv bemerkbar macht.

Entsprechende Versuche haben gezeigt, daß mit der erfindungsgemäßen Topfspinnvorrichtung einerseits hohe Drehzahlen realisiert werden können und sich andererseits die benötigte Antriebsenergie gegenüber konventionellen Topfspinnvorrichtungen deutlich verringern läßt.

In bevorzugter Ausführungsform ist dabei, wie in Anspruch 2 dargelegt, zumindest die Zentrifugenummantelung in permanentmagnetischen Magnetlagern gehalten.

Besonders vorteilhaft ist die im Anspruch 3 angegebene Ausbildung, da permanentmagnetische Magnetlager den großen Vorteil haben, daß sie während des ungestörten Spinnprozesses keine Energie benötigen. Lediglich zur Kompensation von Störkräften ist für die elektronische Lageregeleinrichtung Energie notwendig. Die beschriebene Lageranordnung führt insgesamt zu einer erheblichen Verringerung der benötigten Antriebsenergie.

Durch Lageregeleinrichtungen, wie sie im Anspruch 6 beschrieben sind, kann dabei jede Lageänderung der umlaufenden Bauelemente sofort feinfühlig ausgeregelt werden, wobei der dazu benötigte Energieaufwand relativ gering ist.

In bevorzugter Ausführungsform bestehen die permanentmagnetischen Magnetlager für die Zentrifugenummantelung aus einem in oder am Spinngehäuse festgelegten Permanentmagnetring, der auf einen an der Zentrifugenummantelung angeordneten Gegenpolring wirkt (Anspruch 7).

Die Zentrifugenummantelung kann dabei aus einem nichtmagnetischen Material hergestellt sein. In diesem Fall ist der Gegenpolring beispielsweise, wie in Anspruch 10 dargelegt, als dünnwandiger Ring ausgebildet, der aus einem ferromagnetischen Material, zum Beispiel Stahl, gefertigt ist.

Anstelle eines kostengünstigen Stahlringes ist auch die Verwendung eines zweiten Permanentmagnetringes möglich (Anspruch 8). Durch die Verwendung zweier Permanentmagnetringe erhält man relativ starke magnetische Lagerkräfte, was sich vorteilhaft auf den Lauf des Rotationskörpers auswirkt. Werden sich gegenseitig abstoßende Permanentmagnetringe (Anspruch 9) eingesetzt, vereinfacht sich die Lageregeleinrichtung.

Wenn die Zentrifugenummantelung selbst aus ferromagnetischem Material gefertigt ist, kann auf einen zusätzlichen Gegenpolring ganz verzichtet werden, da in diesem Fall die gesamte Zentrifugenummantelung den Gegenpolring bildet (Anspruch 11).

Die bei der Verwendung von permanentmagnetischen Magnetlagern notwendige Lageregeleinrichtung besitzt vorzugsweise, wenn eine radiale Lageregelung erfolgt, wie im Anspruch 12 ausgeführt, zwei versetzt angeordnete Steuerspulen, die entsprechend der auftretenden Lageabweichung bestromt werden können. Eine solche an eine Steuereinrichtung angeschlossene Lageregeleinrichtung ist kostengünstig und gewährleistet zuverlässig, daß die rotierenden Bauteile während des Laufes in einer stabilen Mittellage gehalten werden.

In vorteilhafter Ausführungsform sind die Steuerspulen dabei, wie im Anspruch 13 dargelegt, orthogonal zueinander angeordnet, da eine solche Anordnung auf relativ einfache Weise eine Zweiachsenregelung ermöglicht.

Als Variante zu der im Anspruch 13 beschriebenen Ausführungsform ist grundsätzlich auch die im Anspruch 14 offenbarte Ausbildung denkbar.

Die axiale Lageregeleinrichtung für die Magnetlager der Spinnzentrifuge besitzt vorzugsweise eine bestrombare, ringförmige Steuerspule. Mit einer solchen ringförmigen Steuerspule läßt sich eine im Bedarfsfall starke und gleichmäßige, axiale Kraftkomponente erzeugen (Anspr.15).

Die im Anspruch 18 beschriebene vorteilhafte Ausführungsform führt zu einer weitestgehenden Selbstzentrierung der Spinnzentrifuge. Es ist daher möglich, lediglich im Bereiche eines der Magnetlager eine Lageregeleinrichtung vorzusehen, die dabei vorzugsweise, wie im Anspruch 15 beschrieben, als ringförmige Steuerspule aufgebaut ist.

Die im Anspruch 19 dargelegte Ausführungsform der Zentrifugenummantelung hat sich als besonders vorteilhaft erwiesen, da eine solche Ausbildung zur Brechung von turbulenten Strömungswirbeln führt, die an der Außenfläche der mit hoher Drehzahl umlaufenden Spinnzentrifuge auftreten können.

Des weiteren hat es sich gezeigt, daß sich mit Abständen, wie sie im Anspruch 20 beschrieben sind, optimale Ergebnisse erzielen lassen.

Weitere Einzelheiten und vorteilhafte Ausbildungen der Erfindung sind nachfolgend anhand der Zeichnungen und den dort schematisch wiedergegebenen Ausführungsbeispielen erläutert. Es zeigt:
- Figur 1: stark schematisch eine Spinnstelle mit einer erfindungsgemäß ausgebildeten Topfspinnvorrichtung,
- Figur 2: die erfindungsgemäße Topfspinnvorrichtung in einem gegenüber Figur 1 vergrößerten Maßstab, im Längsschnitt,
- Figur 2a: eine weitere Ausführungsform einer Topfspinnvorrichtung mit abstoßend polarisierten Permanentmagnetringen für die magnetische Lagerung der Zentrifugenummantelung,
- Figur 2b: eine dritte Ausführungsform einer Topfspinnvorrichtung mit stirnseitiger Magnetlagerung für Spinntopf und Zentrifugenummantelung,
- Figur 3: schematisch eine radiale Lageregeleinrichtung, wie sie im Bereich der permanentmagnetischen Magnetlager der Zentrifugenummantelung Verwendung findet,
- Figur 4: eine weitere Ausführungsform einer radialen Lageregeleinrichtung,
- Figur 5: eine spezielle Ausführungsform einer Zentrifugenummantelung.

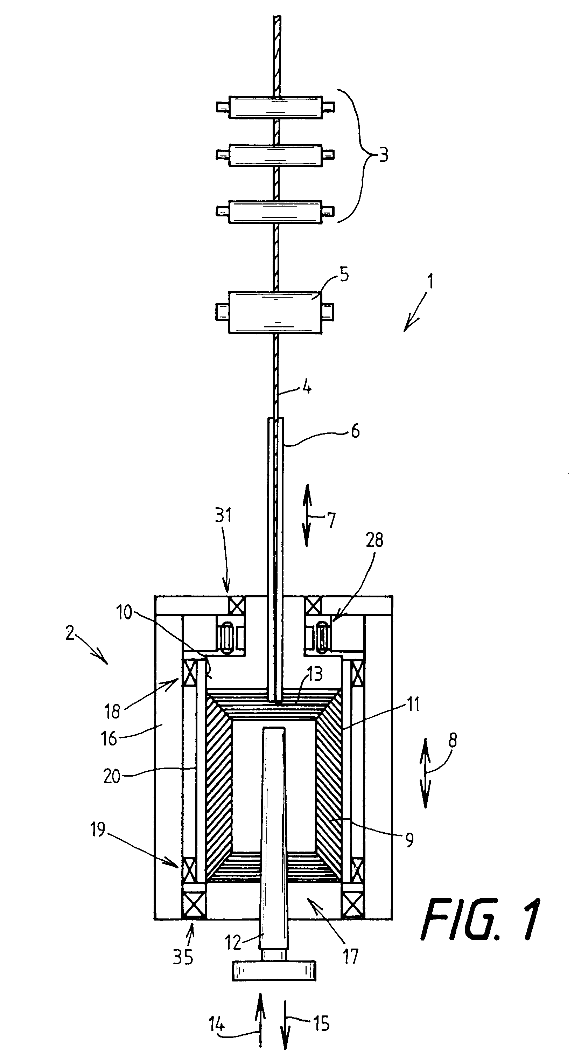

In Figur 1 ist schematisch eine insgesamt mit der Bezugszahl 1 gekennzeichnete Spinnstelle einer nicht näher dargestellten Topfspinnmaschine dargestellt.

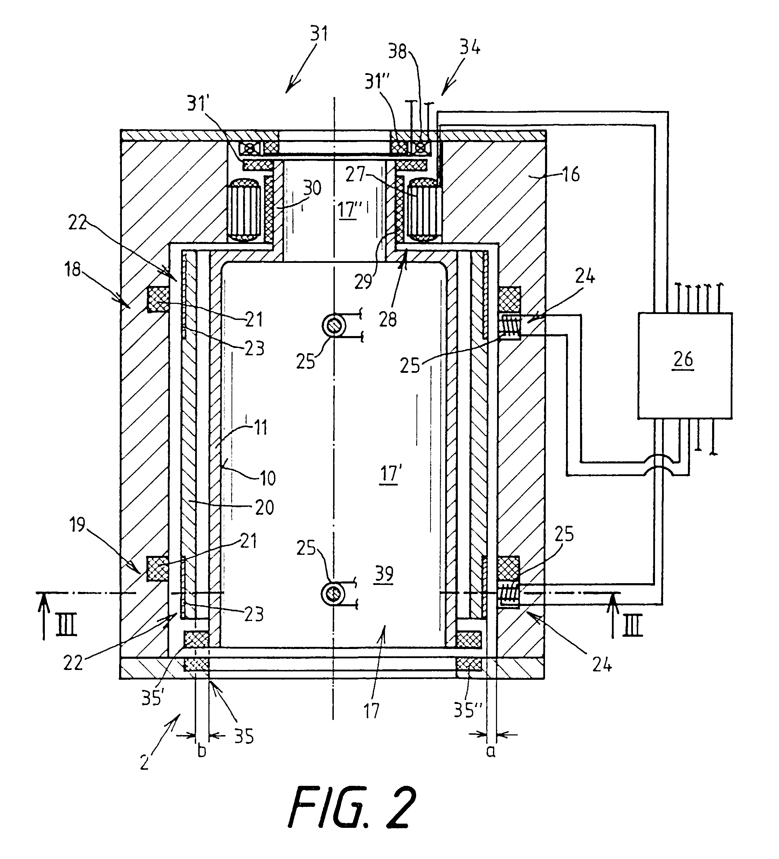

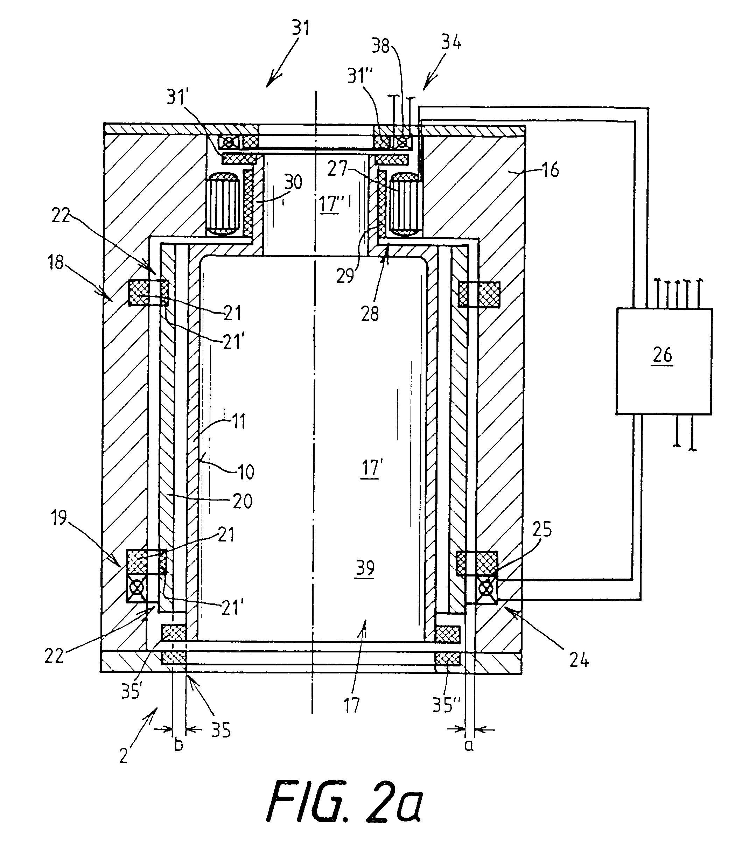

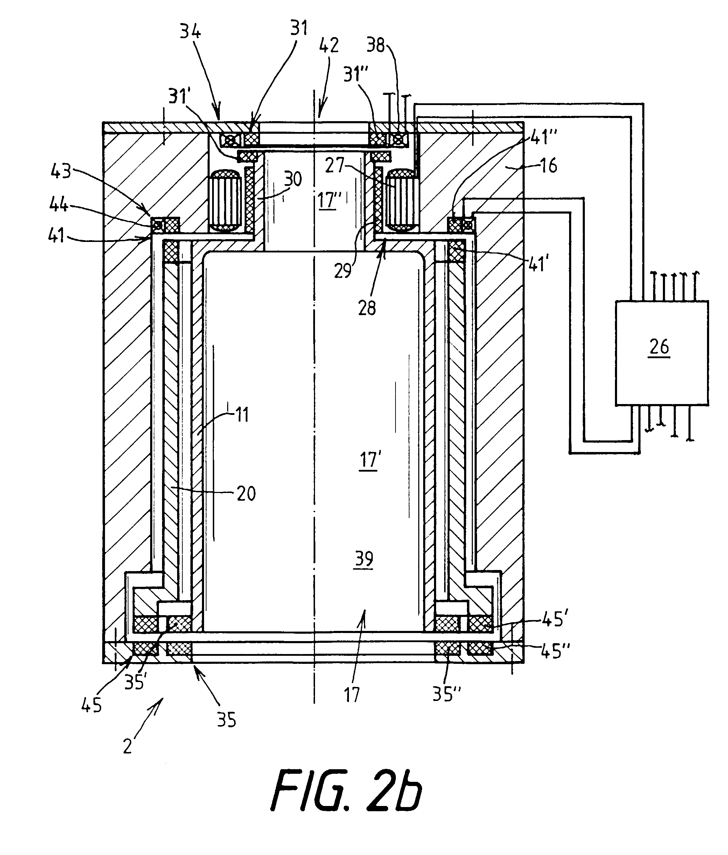

Die in Figur 2 gegenüber der Figur 1 im größeren Maßstab dargestellte Topfspinnvorrichtung 2 ist lediglich in einem schematischen Längsschnitt gezeigt, wobei nur die zum Verständnis der Erfindung erforderlichen Bauteile dargestellt und beschrieben sind.

Wie bekannt, weisen derartige Topf- oder Zentrifugenspinnmaschinen in der Regel mehrere Spinnstellen 1 mit Topfspinnvorrichtungen 2 auf.

Wie angedeutet, ist oberhalb der Topfspinnvorrichtung 2 ein Streckwerk 3 angeordnet, in dem ein Faserband 4 verstreckt wird. Das Faserband 4 kann dabei, (nicht dargestellt) entweder aus Spinnkannen oder von Flyerspulen geliefert werden. Das verzogene Faserband 4 wird über Lieferwalzen 5 in einen Fadenführer 6 befördert.
Der Fadenführer 6 ist in Richtung des Doppelpfeiles 7 beweglich gelagert und führt während des Spinnprozesses ständig eine vertikale Changierbewegung aus. Während des Spinnprozesses wird außerdem das Spinngehäuse 16 der Topfspinnvorrichtung 2 in Richtung des Pfeiles 8 langsam angehoben, so daß das aus der Fadenführermündung austretende Faserband 4 versponnen und als sogenannter Garnkuchen 9 an der Innenwandung 10 der mit hoher Drehzahl umlaufenden Spinnzentrifuge 11 abgelegt wird.

Wenn der Garnkuchen 9 eine vorgegebene Größe erreicht hat, wird, im Ausführungsbeispiel von unten, eine Umspulhülse 12 in den Laufweg des in der Topfspinnvorrichtung 2 zwischen Fadenführermündung und Garnkuchen rotierenden Garnschenkels 13 geschoben (Pfeil 14) und damit der Umspulprozeß, bei dem das Garn des Garnkuchens 9 auf die Umspulhülse 12 umgewickelt wird, eingeleitet.

Gleichzeitig wird am Streckwerk 3 die Faserbandzufuhr eingestellt.

Die bewickelte Umspulhülse 12 wird anschließend nach unten (Pfeil 15) aus der Topfspinnvorrichtung 2 herausgezogen und über eine (nicht dargestellte) Transporteinrichtung zu einer nachgeschalteten Spuleinrichtung transportiert, wo das Garn der Umspulhülse auf eine großvolumige Kreuzspule umgespult wird.

In Figur 2 ist die erfindungsgemäße Topfspinnvorrichtung 2, wie bereits erwähnt, gegenüber der Figur 1 in einem größeren Maßstab dargestellt.
Die Topfspinnvorrichtung 2 weist ein Spinngehäuse 16 auf, das eine abgestufte Lageröffnung 17 besitzt, mit einem in Durchmesser und Länge größeren unteren Bereich 17' sowie einem schmaleren oberen Bereich 17''. In der Lageröffnung 17 läuft mit hoher Drehzahl eine Spinnzentrifuge 11 um, die von einer Zentrifugenummantelung 20 umgeben wird. Während des
Spinnprozesses schleppt die durch einen elektromotorischen Antrieb 28, der vorzugsweise als permanentmagnetischer Synchronmotor ausgebildet ist, beaufschlagte, mit hoher Drehzahl im Spinngehäuse 16 umlaufende Spinnzentrifuge 11 über Luftreibung die Zentrifugenummantelung 20 mit. Die Drehzahl der Zentrifugenummantelung 20 bleibt dabei unterhalb der Drehzahl der Spinnzentrifuge 11.

Im Bereich 17' der Lageröffnung 17 sind Magnetlager 18, 19 zur Lagerung der Zentrifugenummantelung 20 angeordnet. Diese vorzugsweise permanentmagnetischen Magnetlager 18, 19 bestehen dabei jeweils aus einem Permanentmagnetring 21 sowie einem beabstandet an der Zentrifugenummantelung 20 festgelegten Gegenpolring 22.
Dieser Gegenpolring 22 ist vorzugsweise, wenn die Zentrifugenummantelung 20, wie im Ausführungsbeispiel gemäß Figur 2, aus einem nichtmagnetischen Material besteht, als dünnwandiger magnetisierbarer Stahlring 23 ausgebildet. Es ist in einem solchen Fall allerdings auch möglich, als Gegenpolring einen zweiten Permanentmagnetring 21' einzusetzen. Eine weitere Möglichkeit besteht darin, die Zentrifugenummantelung 20 selbst aus einem ferromagnetischen Werkstoff, z. B. Stahl, zu fertigen.

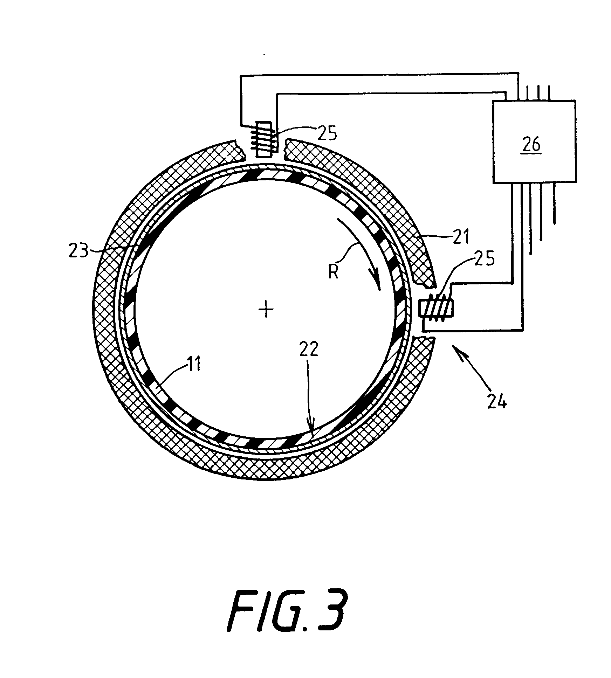

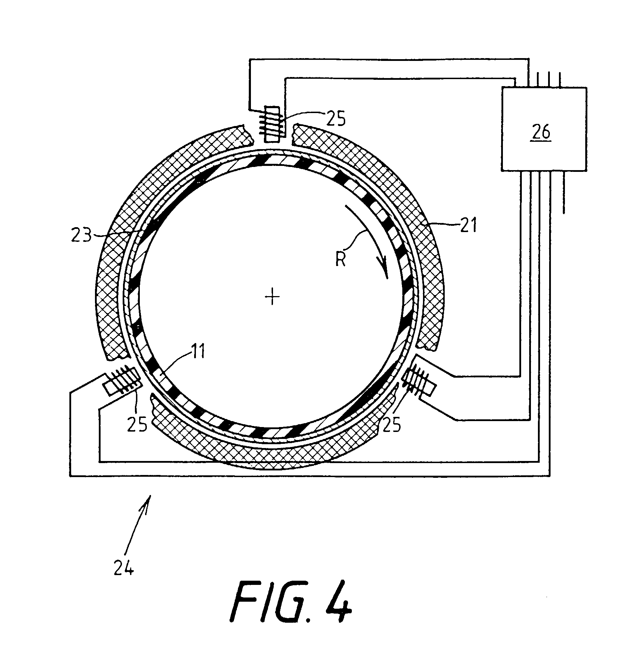

Wenn zwei gegenüberliegende Permanentmagnetringe 21 und 21'zum Einsatz kommen (Ausführungsbeispiel Figur 2a), können diese sich gegenseitig anziehend ausgebildet sein. Wie bei einem Gegenpolring aus Stahl oder dgl. kommen auch in diesem Fall Lageregeleinrichtungen zum Einsatz, wie sie in den Figuren 3 und 4 dargestellt sind. Das heißt, im Bereich der Magnetlager 18, 19 oder im Bereich eines dieser Magnetlager ist jeweils eine radiale Lageregeleinrichtung 24 vorgesehen.

Die Lageregeleinrichtung 24 weist vorzugsweise (Fig.3) zwei orthogonal angeordnete, bestrombare Steuerspulen 25 auf, die, entsprechend ihrer Ansteuerung über die Steuereinrichtung 26, eine positive oder eine negative Kraftkomponente erzeugen, so daß die Zentifugenummantelung 20 während ihres Umlaufes in einer stabilen Mittellage gehalten wird.
Die in Fig.4 dargestellte Lageregeleinrichtung 24 besitzt drei um 120° versetzt angeordnete Steuerspulen 25. Die Arbeitsweise dieser Einrichtung ist mit der Einrichtung gemäß Fig.3 in etwa vergleichbar.

Die genaue Wirkungsweise derartiger Lageregeleinrichtungen ist bekannt und beispielsweise in der bereits eingangs genannten DE 42 08 039 A1 oder in der DE 17 50 602 B beschrieben.
Mit Vorteil läßt sich auch eine Gramme-Spule einsetzen, wie sie für Magnetlager aus der DE 22 13 465 A bekannt ist.

Sind, wie im Ausführungsbeispiel der Figur 2a angedeutet, als Magnetlager jeweils zwei sich abstoßend polarisierte Permanentmagnetringe 21,21' eingesetzt, so bedarf es für die Lageregeleinrichtung 24a nur noch einer axialwirkenden Stabilisierungsspule 25a.

In Figur 2b sind für die Spinnzentrifuge 11 sowie die Zentrifugenummantelung 20 an ihren jeweiligen Stirnseiten Magnetlager 31,35 für die Spinnzentrifuge bzw. Magnetlager 41,45 für die Zentrifugenummantelung vorgesehen. Alle vier Magnetlager sind analog ausgebildet und weisen am Magnetspalt gegenüberliegende Permanentmagnetringe 31',31" bzw. 35',35" sowie 41',41'' bzw. 45',45'' auf. Die Permanentmagnetringe 31',35' sowie 41',45' sind dabei an den Stirnseiten der Spinnzentrifuge 11 bzw. der Zentrifugenummantelung 20 befestigt, die Permanentmagnetringe 31",35" und 41'',45'' sind am Spinngehäuse 16 der Topfspinneinrichtung 2 angebracht.

Die sich gegenüberstehenden Permanentmagnetringe sind dabei anziehend polarisiert. An den Stirnseiten von Spinnzentrifuge und Zentrifugenummantelung befinden sich jeweils Lageregelungeinrichtungen 34 bzw.43 zur axialen Stabilisierung der Magnetlager 31,35 bzw. 41,45.Diese Lageregeleinrichtungen besitzen ringförmige Steuerspulen 38 bzw.44.

In den Ausführungsbeispielen nach den Figuren 2,2a,2b ist jeweils im abgestuften, schmaleren Bereich 17'' der Lageröffnung 17 des Spinngehäuses 16 der Stator 27 eines elektromagnetischen Antriebes 28, beispielsweise eines permanentmagnetischen Synchronmotors, angeordnet. Der elektromotorische Antrieb 28 ist, wie in den Figuren dargestellt, vorzugsweise ebenfalls an die Steuereinrichtung 26 angeschlossen.
Der Rotor 29 dieses Drehstrommotors 28 ist dabei am halsartigen Ansatz 30 der Spinnzentrifuge 11 festgelegt. Eine solche Anordnung führt dazu, daß der Außendurchmesser der Spinnzentrifuge 11 gegenüber zum Beispiel durch die DE 42 08 039 A1 bekannten Vorrichtungen deutlich verkleinert wird, was sich, wie in der Beschreibungseinleitung bereits ausgeführt, bezüglich der benötigten Antiebsenergie ebenfalls positiv auswirkt.

In Figur 2 ist, wie in den Figuren 2a,2b, am halsartigen Halsansatz 30 der Spinnzentrifuge 11 ein Permanentmagnetring 31' eines permanentmagnetischen Magnetlagers 31 angeordnet. Der Permanentmagnetring 31' korrespondiert mit einem entsprechenden, am Spinngehäuse 16 festgelegten Permanentmagnetring 31''. Die magnetische Ausrichtung der Permanentmagnetringe 31', 31'' ist dabei derart, daß sich gegensinnige Pole gegenüberstehen, d. h., daß eine anziehende magnetische Kraft auftritt. Im Bereich des Magnetlagers 31 ist des weiteren eine axiale Lageregeleinrichtung 34 angeordnet. Die axiale Lageregeleinrichtung 34 weist vorzugsweise eine bestrombare, ringförmige Steuerspule 38 auf, die ebenfalls an die Steuereinrichtung 26 angeschlossen ist.

Die Spinnzentrifuge 11 ist außerdem an ihrem unteren Ende in einem Magnetlager 35 gelagert, das, wie das Magnetlager 31, als Magnetlager mit gegenüberliegenden Permanentmagnetringen ausgebildet ist, wobei ein an der Spinnzentrifuge 11 angeordneter Permanentmagnetring 35' mit einem Permanentmagnetring 35'' am Spinngehäuse 16 korrespondiert. Auch bei diesem Magnetlager ist die magnetische Ausrichtung der Permanentmagnetringe 35', 35'' derart, daß eine anziehende Magnetkraft auftritt.
Wie aus der Figur 2b ersichtlich, eignen sich derartige Magnetlagerungen auch für die Lagerung der Zentrifugenummantelung 20.

Die Erfindung ist nicht auf die vorbeschriebenen Ausführungsbeispiele beschränkt, es sind durchaus weitere Varianten, z.B. hinsichtlich der Ausbildung der Zentrifugenummantelung 20, denkbar, ohne daß dabei der allgemeine Erfindungsgedanke, der im wesentlichen in der magnetischen Lagerung von Spinnzentrifuge 11 und Zentrifugenummantelung 20 besteht, verlassen wird.

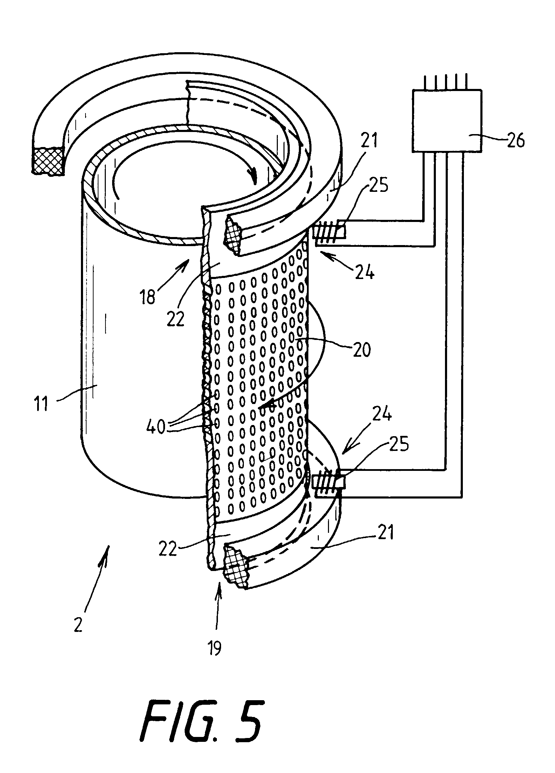

In Fig.5 ist beispielweise eine Spinnzentrifuge 11 mit einer Zentrifugenummantelung 20 dargestellt, die einen strukturierten Mantel aufweist. D.h., der Mantel besitzt Strukturelemente, vorzugsweise periodisch angeordnete Bohrungen 40, durch die die turbulente Strömung, die während des Umlaufes der mit hoher Drehzahl rotierenden Spinnzentrifuge 11 im Bereich deren Oberfläche auftritt, gebrochen wird. Ein derartig strukturierter Mantel 20 für die Spinnzentrifuge 11 ist aus der WO 96/08658 bekannt.

## Patentansprüche

1. Topfspinnvorrichtung (2) mit einem Spinngehäuse (16), einer innerhalb des Spinngehäuses (16) mit hoher Drehzahl umlaufenden Spinnzentrifuge (11) sowie einer zwischen Spinngehäuse (16) und Spinnzentrifuge (11) angeordneten, drehbar gelagerten Zentrifugenummantelung (20), die von der umlaufenden Spinnzentrifuge (11) über Luftreibung mitgenommen wird,
dadurch gekennzeichnet,
daß die angetriebene, mit hoher Drehzahl rotierbare Spinnzentrifuge (11) in Magnetlagern (31, 35) abgestützt ist und
daß die gegenüber der Spinnzentrifuge (11) mit verminderter Drehzahl umlaufende Zentrifugenummantelung (20) ebenfalls in Magnetlagern (18,19 bzw. 41,45) gehalten ist.

2. Topfspinnvorrichtung nach Anspruch 1, dadurch gekennzeichnet, daß wenigstens ein Magnetlager (18,19;41,45) für die Zentrifugenummantelung (20) als permanentmagnetisches Magnetlager ausgebildet ist.

3. Topfspinnvorrichtung nach Anspruch 1, dadurch gekennzeichnet, daß sowohl die Magnetlager (31,35) für die Spinnzentrifuge (11) als auch die Magnetlager (18,19;41,45) für die Zentrifugenummantelung (20) als permanentmagnetische Magnetlager ausgebildet sind.

4. Topfspinnvorrichtung nach einem der vorherigen Ansprüche, dadurch gekennzeichnet, daß an den Stirnseiten der Spinnzentrifuge (11) jeweils ein Permanentmagnetring (31',35') angeordnet ist, der mit einem entsprechenden Permanentmagnetring (31'',35'') am Spinngehäuse (16) korrespondiert, wobei die sich gegenüberstehenden Permanentmagnetringe (31',31" bzw. 35',35'') anziehend polarisiert sind.

5. Topfspinnvorrichtung nach einem der vorherigen Ansprüche, dadurch gekennzeichnet, daß an den Stirnseiten der Zentrifugenummantelung (20) jeweils ein Permanentmagnetring (41',45') angeordnet ist, der mit einem entsprechenden Permanentmagnetring (41'',45'') am Spinngehäuse (16) korrespondiert, wobei die sich gegenüberstehenden Permanentmagnetringe (41',41" bzw. 45',45'') anziehend polarisiert sind.

6. Topfspinnvorrichtung nach einem der vorherigen Ansprüche, dadurch gekennzeichnet, daß wenigstens eines der Magnetlager (31,35) für die Spinnzentrifuge (11) eine axiale Lageregeleinrichtung (34) und wenigstens eines der Magnetlager (18,19) für die Zentrifugenummantelung (20) eine radiale Lageregeleinrichtung (24) aufweist.

7. Topfspinnvorrichtung nach Anspruch 3,dadurch gekennzeichnet, daß die permanentmagnetischen Magnetlager (18,19) für die Zentrifugenummantelung (20) jeweils aus einem im/am Spinngehäuse (16) festgelegten Permanentmagnetring (21) und einem an der Zentrifugenummantelung (20) angeordneten, beabstandeten Gegenpolring (22) bestehen.

8. Topfspinnvorrichtung nach Anspruch 7, dadurch gekennzeichnet, daß die Magnetlager (18,19) jeweils zwei Permanentmagnetringe (21,21') umfassen, wobei der Permanentmagnetring (21) im/am Spinngehäuse (16) festgelegt ist, während der den Gegenpolring (22) bildende Permanentmagnetring (21') an der Zentrifugenummantelung (20) angeordnet ist.

9. Topfspinnvorrichtung nach Anspruch 8, dadurch gekennzeichnet, daß die sich in den Magnetlagern (18,19) gegenüberstehenden Permanentmagnetringe (21,21') abstoßend polarisiert sind.

10. Topfspinnvorrichtung nach Anspruch 7, dadurch gekennzeichnet, daß als Gegenpolring (22) ein dünnwandiger Stahlring (23) vorgesehen ist, der in/an der aus nichtmagnetischem Material gefertigten Zentrifugenummantelung (20) befestigt ist.

11. Topfspinnvorrichtung nach Anspruch 7, dadurch gekennzeichnet, daß der Gegenpolring (22) der Magnetlager (18,19) direkt durch die aus einem ferromagnetischen Material gefertigt Zentrifugenummantelung (20) gebildet wird.

12. Topfspinnvorrichtung nach Anspruch 6, dadurch gekennzeichnet, daß die radiale Lageregeleinrichtung (24) wenigstens zwei versetzt angeordnete, bestrombare Steuerspulen (25) umfaßt.

13. Topfspinnvorrichtung nach Anspruch 12, dadurch gekennzeichnet, daß die Steuerspulen (25) orthogonal zueinander angeordnet sind.

14. Topf spinnvorrichtung nach Anspruch 4, dadurch gekennzeichnet, daß die radiale Lageregeleinrichtung (24) drei, vorzugsweise um 120° versetzt angeordnete Steuerspulen (25) aufweist.

15. Topf spinnvorrichtung nach Anspruch 6, dadurch gekennzeichnet, daß die axiale Lageregeleinrichtung (34) für die Spinnzentrifuge (11) eine bestrombare, ringförmige Steuerspule (38) aufweist.

16. Topfspinnvorrichtung nach Anspruch 1, dadurch gekennzeichnet, daß die Spinnzentrifuge (11) einen im Durchmesser reduzierten Halsbereich (30) sowie einen von der Zentrifugenummantelung (20) umgebenen Spinnbereich (39) aufweist, wobei im Halsbereich (30) ein elektromotorischer Einzelantrieb (28) angeordnet ist.

17. Topf spinnvorrichtung nach Anspruch 13, dadurch gekennzeichnet, daß der elektromotorische Einzelantrieb (28) als permanentmagnetischer Synchronmotor ausgebildet ist.

18. Topfspinnvorrichtung nach einem der vorherigen Ansprüche, dadurch gekennzeichnet, daß die Magnetlager (31,35) für die Spinnzentrifuge (11) einerseits am Rand des Halsbereiches (30) und andererseits am Rand des Spinnbereiches (39) angeordnet sind und jeweils zwei gegenüberliegende Permanentmagnetringe (31',31" bzw. 35',35'') aufweisen.

19. Topf spinnvorrichtung nach einem der vorherigen Ansprüch, dadurch gekennzeichnet, daß die Zentrifugenummantelung (20) Strukturelemente, vorzugsweise Bohrungen (40), aufweist

20. Topfspinnvorrichtung nach einem der vorherigen Ansprüche, dadurch gekennzeichnet, daß der radiale Abstand (a) zwischen der Zentrifugenummantelung (20) und dem Spinngehäuse (16) sowie der radiale Abstand (b) zwischen der Zentrifugenummantelung und der Spinnzentrifuge (11) jeweils etwa 2 mm beträgt.

21. Topfspinnvorrichtung nach einem der vorherigen Ansprüche, dadurch gekennzeichnet, daß zur Lageregelung eine Gramme-Spule eingesetzt wird.

## Claims

1. Pot spinning device (2) with a spinning housing (16), a spinning centrifuge (11) rotating inside the spinning housing (16) at high speed and a rotatably mounted centrifuge casing (20) which is arranged between the spinning housing (16) and spinning centrifuge (11) and is entrained by the rotating spinning centrifuge (11) by atmospheric friction, characterized in that the driven spinning centrifuge (11) which can be rotated at high speed is supported in magnetic bearings (31, 35) and in that the centrifuge casing (20) rotating at reduced speed with respect to the spinning centrifuge (11) is also held in magnetic bearings (18, 19 and 41, 45).

2. Pot spinning device according to claim 1, characterized in that at least one magnetic bearing (18, 19; 41, 45) for the centrifuge casing (20) is designed as a permanent magnetic bearing.

3. Pot spinning device according to claim 1, characterized in that both the magnetic bearings (31, 35) for the spinning centrifuge (11) and the magnetic bearings (18, 19; 41, 45) for the centrifuge casing (20) are designed as permanent magnetic bearings.

4. Pot spinning device according to one of the preceding claims, characterized in that a permanent magnetic ring (31', 35') is arranged in each case on the end faces of the spinning centrifuge (11), which permanent magnetic ring corresponds to a corresponding permanent magnetic ring (31'', 35'') on the spinning housing (16), the opposing permanent magnetic rings (31', 31'' and 35', 35'') being polarised so as to be attractive.

5. Pot spinning device according to one of the preceding claims, characterized in that a permanent magnetic ring (41', 45') is arranged in each case on the end faces of the centrifuge casing (20), which permanent magnetic ring corresponds to a corresponding permanent magnetic ring (41", 45'') on the spinning housing (16), the opposing permanent magnetic rings (41', 41'' and 45', 45'') being polarized so as to be attractive.

6. Pot spinning device according to one of the preceding claims, characterized in that at least one of the magnetic bearings (31, 35) for the spinning centrifuge (11) has an axial bearing controller (34) and at least one of the magnetic bearings (18, 19) for the centrifuge casing (20) has a radial bearing controller (24).

7. Pot spinning device according to claim 3, characterized in that the permanent magnetic bearings (18, 19) for the centrifuge casing (20) consist in each case of a permanent magnetic ring (21) fixed in/on the spinning housing (16) and a distanced opposite pole ring (22) arranged on the centrifuge casing (20).

8. Pot spinning device according to claim 7, characterized in that the magnetic bearings (18, 19) in each case comprise two permanent magnetic rings (21, 21'), the permanent magnetic ring (21) being fixed in flash on the spinning housing (16), whilst the permanent magnetic ring (21') forming the opposite pole ring (22) is arranged on the centrifuge casing (20).

9. Pot spinning device according to claim 8, characterized in that the opposing permanent magnetic rings (21, 21') in the magnetic bearings (18, 19) are polarized so as to be repellant.

10. Pot spinning device according to claim 7, characterized in that a thin-walled steel ring (23) is provided as an opposite pole ring (22), which steel ring is secured in/on the centrifuge casing manufactured from non-magnetic material.

11. Pot spinning device according to claim 7, characterized in that the opposite pole ring (22) of the magnetic bearings (18, 19) is formed directly by the centrifuge casing (20) manufactured from a ferromagnetic material.

12. Pot spinning device according to claim 6, characterized in that the radial bearing controller (24) comprises at least two control coils (25) which can be charged with current and are offset.

13. Pot spinning device according to claim 12, characterized in that the control coils (25) are arranged orthogonally to one another.

14. Pot spinning device according to claim 4, characterized in that the radial bearing controller (24) has three control coils (25) preferably arranged so as to be offset by 120°.

15. Pot spinning device according to claim 6, characterized in that the axial bearing controller (34) for the spinning centrifuge (11) has an annular control coil (38) which can be charged with current.

16. Pot spinning device according to claim 1, characterized in that the spinning centrifuge (11) has a neck region (30) reduced in diameter and a spinning region (39) surrounded by the centrifuge casing (20), an electromotive single drive (28) being arranged in the neck region (30).

17. Pot spinning device according to claim 13, characterized in that the electromotive single drive (28) is designed as a permanent magnetic synchronous motor.

18. Pot spinning device according to one of the preceding claims, characterized in that the magnetic bearings (31, 35) for the spinning centrifuge (11) are arranged on the one hand on the edge of the neck region (30) and on the other hand on the edge of the spinning region (39) and in each case have two opposing permanent magnetic rings (31', 31'' and 35', 35'').

19. Pot spinning device according to one of the preceding claims, characterized in that the centrifuge casing (20) has structural elements, preferably drilled holes (40).

20. Pot spinning device according to one of the preceding claims, characterized in that the radial distance (a) between the centrifuge casing (20) and the spinning housing (16) and the radial distance (b) between the centrifuge casing and the spinning centrifuge (11) is approximately 2 mm in each case.

21. Pot spinning device according to one of the preceding claims, characterized in that a Gramme coil is used for the bearing control.

## Revendications

1. Dispositif (2) de filage à pot, avec un boîtier de filage (16), une centrifugeuse de filage (11) tournant à grande vitesse à l'intérieur du boîtier de filage (16), ainsi qu'une enveloppe de centrifugeuse (20) montée à rotation, qui est disposée entre le boîtier de filage (16) et la centrifugeuse de filage (11) et qui est conjointement entraînée, par frottement de l'air, par la centrifugeuse de filage (11) rotative,
**caractérisé** en ce que la centrifugeuse de filage (11) entraînée, rotative à grande vitesse, est soutenue dans des paliers magnétiques (31, 35), et en ce que l'enveloppe de centrifugeuse (20), qui tourne à une vitesse réduite par rapport à la centrifugeuse de filage (11), est également maintenue dans des paliers magnétiques (18, 19 ou 41, 45).

2. Dispositif de filage à pot selon la revendication 1, **caractérisé** en ce qu'au moins un palier magnétique (18, 19 ; 41, 45) pour l'enveloppe de centrifugeuse (20) est réalisé sous forme de palier magnétique à aimantation permanente.

3. Dispositif de filage à pot selon la revendication 1, **caractérisé** en ce que tant les paliers magnétiques (31, 35) pour la centrifugeuse de filage (11) que les paliers magnétiques (18, 19 ou 41, 45) pour l'enveloppe de centrifugeuse (20) sont réalisés sous forme de paliers magnétiques à aimantation permanente.

4. Dispositif de filage à pot selon une des revendications précédentes, **caractérisé** en ce qu'une bague d'aimant permanent respective (31', 35') est disposée sur les côtés frontaux de la centrifugeuse de filage (11), bague qui correspond avec une bague d'aimant permanent correspondante (31", 35") sur le boîtier de filage (16), les bagues d'aimant permanent en vis-à-vis (31', 31" ou 35', 35") étant polarisées en attraction.

5. Dispositif de filage à pot selon une des revendications précédentes, **caractérisé** en ce qu'une bague d'aimant permanent respective (41', 45') est disposée sur les côtés frontaux de l'enveloppe de centrifugeuse (20), bague qui correspond avec une bague d'aimant permanent correspondante (41", 45") sur le boîtier de filage (16), les bagues d'aimant permanent en vis-à-vis (41', 41" ou 45', 45") étant polarisées en attraction.

6. Dispositif de filage à pot selon une des revendications précédentes, **caractérisé** en ce qu'au moins un des paliers magnétiques (31, 35) pour la centrifugeuse de filage (11) présente un dispositif (34) de réglage de position axiale, et au moins un des paliers magnétiques (18, 19) pour l'enveloppe de centrifugeuse (20) présente un dispositif (24) de réglage de position radiale.

7. Dispositif de filage à pot selon la revendication 3, **caractérisé** en ce que les paliers magnétiques (18, 19) à aimantation permanente pour l'enveloppe de centrifugeuse (20) sont chacun constitués d'une bague d'aimant permanent (21) fixée dans ou sur le boîtier de filage (16), et d'une bague d'antipôle (22) distante, disposée sur l'enveloppe de centrifugeuse (20).

8. Dispositif de filage à pot selon la revendication 7, **caractérisé** en ce que les paliers magnétiques (18, 19) comprennent chacun deux bagues d'aimant permanent (21, 21'), la bague d'aimant permanent (21) étant fixée dans ou sur le boîtier de filage (16), tandis que la bague d'aimant permanent (21'), constituant la bague d'antipôle (22), est disposée sur l'enveloppe de centrifugeuse (20).

9. Dispositif de filage à pot selon la revendication 8, **caractérisé** en ce que les bagues d'aimant permanent (21, 21') en vis-à-vis dans les paliers magnétiques (18, 19) sont polarisées en répulsion.

10. Dispositif de filage à pot selon la revendication 7, **caractérisé** en ce qu'il est prévu comme bague d'antipôle (22) une bague en acier (23) à paroi mince, qui est fixée dans ou sur l'enveloppe de centrifugeuse (20) réalisée en matériau non magnétique.

11. Dispositif de filage à pot selon la revendication 7, **caractérisé** en ce que la bague d'antipôle (22) des paliers magnétiques (18, 19) est directement formée par l'enveloppe de centrifugeuse (20), réalisée en un matériau ferromagnétique.

12. Dispositif de filage à pot selon la revendication 6, **caractérisé** en ce que le dispositif (24) de réglage de position radiale comprend au moins deux bobines de commande (25) pouvant être alimentées en courant électrique, disposées en décalage.

13. Dispositif de filage à pot selon la revendication 12, **caractérisé** en ce que les bobines de commande (25) sont disposées orthogonalement entre élles.

14. Dispositif de filage à pot selon la revendication 4, **caractérisé** en ce que le dispositif (24) de réglage de position radiale comprend trois bobines de commande (25), disposées de préférence en décalage à 120°.

15. Dispositif de filage à pot selon la revendication 6, **caractérisé** en ce que le dispositif (34) de réglage de position axiale pour la centrifugeuse de filage (11) présente une bobine de commande (38) de forme annulaire, pouvant être alimentée en courant électrique.

16. Dispositif de filage à pot selon la revendication 1, **caractérisé** en ce que la centrifugeuse de filage (11) présente une région de col (30) de diamètre réduit ainsi qu'une région de filage (39) entourée par l'enveloppe de centrifugeuse (20), un entraînement individuel (28) à moteur électrique étant disposé dans la région de col (30).

17. Dispositif de filage à pot selon la revendication 13, **caractérisé** en ce que l'entraînement individuel (28) à moteur électrique est réalisé sous forme de moteur synchrone à aimantation permanente.

18. Dispositif de filage à pot selon une des revendications précédentes, **caractérisé** en ce que les paliers magnétiques (31, 35) pour la centrifugeuse de filage (11) sont disposés d'une part sur le bord de la région de col (30) et d'autre part sur le bord de la région de filage (39), et présentent respectivement deux bagues d'aimant permanent en vis-à-vis (31', 31" ou 35', 35").

19. Dispositif de filage à pot selon une des revendications précédentes, **caractérisé** en ce que l'enveloppe de centrifugeuse (20) présente des éléments de structuration, de préférence des perçages (40).

20. Dispositif de filage à pot selon une des revendications précédentes, **caractérisé** en ce que la distance radiale (a) entre l'enveloppe de centrifugeuse (20) et le boîtier de filage (16), ainsi que la distance radiale (b) entre l'enveloppe de centrifugeuse et la centrifugeuse de filage (11), sont respectivement égales à environ 2 mm.

21. Dispositif de filage à pot selon une des revendications précédentes, **caractérisé** en ce qu'on utilise pour le réglage de position une bobine Gramme.
